# FASCICULE DE BREVET EUROPEEN

(11) **EP 3 004 707 B1**
(45) Date de publication et mention de la délivrance du brevet: **02.01.2019**
(21) Numéro de dépôt: 14727840.2
(22) Date de dépôt: 04.06.2014
(51) Int. Cl.: F16L 1/19, F16L 1/20, F16L 1/235, B66D 1/74

(54) **DISPOSITIF DE POSE D'UN ÉLÉMENT ALLONGÉ DANS UNE ÉTENDUE D'EAU, INSTALLATION ET PROCÉDÉ ASSOCIÉS**
VORRICHTUNG ZUM VERLEGEN EINES LÄNGLICHEN ELEMENTS IN EINEM GEWÄSSER, ZUGEHÖRIGE ANLAGE UND ZUGEHÖRIGES VERFAHREN
DEVICE FOR LAYING AN ELONGATE ELEMENT IN A STRETCH OF WATER, ASSOCIATED INSTALLATION AND ASSOCIATED METHOD

(30) Priorité: 05.06.2013 FR 1355171; 19.06.2013 FR 1355771
(43) Date de publication de la demande: 13.04.2016
(73) Titulaire: Technip France, 92400 Courbevoie (FR)
(72) Inventeur: MALOBERTI, René, F-94500 Champigny Sur Marne (FR)
(74) Mandataire: Lavoix
(86) Numéro de dépôt international: PCT/EP2014/061619
(87) Numéro de publication internationale: WO 2014/195369

(56) Documents cités:
- EP-A1- 0 345 673
- EP-A1- 0 505 264
- US-A- 4 218 025

## Description

La présente invention concerne un dispositif de pose d'un élément allongé dans une étendue d'eau, selon le préambule de la revendication 1.

L'élément allongé est par exemple une conduite. La conduite est notamment destinée à transporter des hydrocarbures recueillis dans le fond de l'étendue d'eau jusqu'à la surface de l'étendue d'eau.

La conduite est en particulier une conduite flexible stockée dans une structure flottante et déroulée dans l'étendue d'eau par l'intermédiaire du dispositif de pose.

Dans tout ce qui suit, une conduite flexible est notamment une conduite telle que décrite dans les documents normatifs publiés par l'American Petroleum Institute (API), API 17J, et API RP17B, bien connus de l'homme du métier.

Cette définition englobe indifféremment les conduites flexibles de type non liées (« unbonded « en anglais), ou liées (« bonded » en anglais).

Plus généralement, et en variante, la conduite flexible est un faisceau composite de type « bundle », comprenant au moins un tube de transport de fluide et un ensemble de câbles électriques ou optiques propres à transporter une puissance électrique ou hydraulique ou une information entre le fond et la surface de l'étendue d'eau.

En variante encore, la conduite est un ombilical décrit dans les documents normatifs de l'American Petroleum Institute (API) API17E.

Plus généralement encore, l'élément allongé est un câble formant par exemple une ligne de descente d'un objet dans l'étendue d'eau. Ce câble est par exemple un câble métallique ou un câble constitué de fibres synthétiques.

Pour déployer des conduites flexibles, il est connu de les dérouler à partir de moyens de stockage présents sur le navire. Les moyens de stockage sont notamment un panier ou un tambour rotatif.

La conduite est déroulée à partir des moyens de stockage, puis est généralement remontée sur une goulotte portée par une tour du dispositif de pose.

Ensuite, la conduite est engagée dans des ensembles de saisie et de déplacement comprenant des tensionneurs à chenilles. La conduite descend ainsi verticalement ou de manière inclinée le long de la tour avant de plonger dans l'étendue d'eau.

La conduite est retenue par les moyens tensionneurs qui assurent sa suspension dans l'étendue d'eau. En outre, les moyens tensionneurs supportent la tension mécanique provenant du poids de la conduite déroulée et évitent aux moyens de stockage de subir ce poids, tout en garantissant que la conduite ne subit pas de flexion qui va au-delà de son rayon minimal de courbure en flexion sans endommagement («MBR» ou «Minimal Bending Radius» en anglais).

Une autre méthode de pose est dite « en S ». L'élément allongé stocké dans un panier est déployé dans l'étendue d'eau par l'arrière de la structure de pose en étant guidé par une goulotte de guidage désignée par le terme anglais « stinger ».

Des moyens tensionneurs placés sur le pont du navire ou sur la goulotte déterminent généralement la vitesse de déroulement de la conduite.

Dans un autre dispositif de pose connu, la présence de moyens tensionneurs n'est pas nécessaire. Dans ce cas, l'élément allongé est enroulé autour du tambour d'un treuil entre les moyens de stockage et l'étendue d'eau. L'élément allongé forme plusieurs spires enroulées autour de l'axe du tambour, ce qui assure une tension de retenue du tronçon de l'élément allongé introduit dans l'étendue d'eau. Cette retenue utilise le principe de l'effet « cabestan ».

Pour assurer le déploiement de l'élément allongé dans l'étendue d'eau, le tambour est motorisé et l'élément allongé se dévide progressivement dans l'étendue d'eau.

Un tel dispositif de pose est donc simple et compact. Toutefois, il ne donne pas entière satisfaction.

En effet, pour assurer une retenue efficace du tronçon immergé de l'élément allongé, il est nécessaire d'effectuer un nombre de tours important autour du tambour, afin de garantir un frottement suffisant entre les spires de l'élément allongé et le tambour. Cependant, cette contrainte de frottement élevé s'oppose à la nécessité d'assurer un glissement de l'élément allongé entre son point d'entrée sur le tambour et son point de sortie du tambour, pour faire glisser latéralement les autres spires déjà introduites sur le tambour.

Lorsque la tension appliquée sur l'élément allongé est très importante, il est donc difficile de mettre en oeuvre un dispositif de pose à effet cabestan, car les forces latérales requises pour pousser les spires sont trop importantes, et produisent des effets néfastes sur l'élément allongé, tel l'écrasement, la rotation, ou la torsion de l'élément allongé.

Pour pallier ce problème, WO 2012/044179 décrit un dispositif de pose du type précité, dans lequel une chaîne sans fin est enroulée sur le tambour suivant une trajectoire hélicoïdale qui suit en permanence l'axe local des spires de l'élément allongé.

La chaîne est munie de patins, qui servent à guider et à déplacer l'élément allongé au fur et à mesure de son dévidement dans l'étendue d'eau, par entraînement en rotation du tambour autour de son axe.

Cette solution améliore le dévidement de l'élément allongé. Cependant, elle nécessite un dispositif de pose encombrant, dans lequel la gestion de la transmission des efforts entre la chaîne et le tambour n'est pas simple à mettre en oeuvre.

En outre, la portion de chaîne en retour entre la sortie du tambour et l'entrée du tambour ajoute à l'encombrement du dispositif et rend difficile le passage des sections d'étendue radiale supérieure de l'élément allongé, tels que les embouts.

EP0505264, US4218025 et EP0345673 décrivent des dispositifs de convoyage dépourvus de patins montés sur une chaine formant un organe sans fin, chaque patin définissant une surface plane de réception.

Un but de l'invention est donc d'obtenir un dispositif de pose d'un élément allongé dans une étendue d'eau, qui soit simple à mettre en oeuvre, tout en offrant une compacité et une facilité d'utilisation maximale, notamment avec un élément allongé présentant des sections d'étendue radiale importante.

À cet effet, l'invention a pour objet un dispositif selon la revendication 1.

Le dispositif selon l'invention peut comprendre l'une ou plusieurs des caractéristiques des revendications 2 à 12, prise(s) isolément ou suivant toute combinaison techniquement possible.

L'invention a également pour objet une installation de pose selon la revendication 13.

L'invention a aussi pour objet un procédé de pose selon la revendication 14.

L'invention sera mieux comprise à la lecture de la description qui va suivre, donnée uniquement à titre d'exemple, et faite en se référant aux dessins annexés, sur lesquels :
- la figure 1 est une vue schématique d'une première installation de pose d'un élément allongé dans une étendue d'eau, comprenant un dispositif de pose selon l'invention ;
- la figure 2 est une vue, prise en coupe partielle suivant un plan transversal à l'axe de rotation, d'un tambour du dispositif de pose de la figure 1 ;
- la figure 3 est une vue en coupe partielle suivant le plan axial médian III-III de la figure 2 ;
- la figure 4 est une vue agrandie de plusieurs détails de la figure 3, illustrant les éléments de déplacement des spires de l'élément allongé ;
- la figure 5 est une vue d'un détail marqué V sur la figure 2 ;
- la figure 6 est une vue analogue à la figure 3 du dispositif de pose d'une deuxième installation selon l'invention ;
- la figure 7 est une vue analogue à la figure 4 du dispositif de pose de la deuxième installation selon l'invention ;
- la figure 8 est une vue analogue à la figure 3 du dispositif de pose d'une troisième installation selon l'invention ;
- la figure 9 est une vue analogue à la figure 4 du dispositif de pose de la troisième installation selon l'invention.

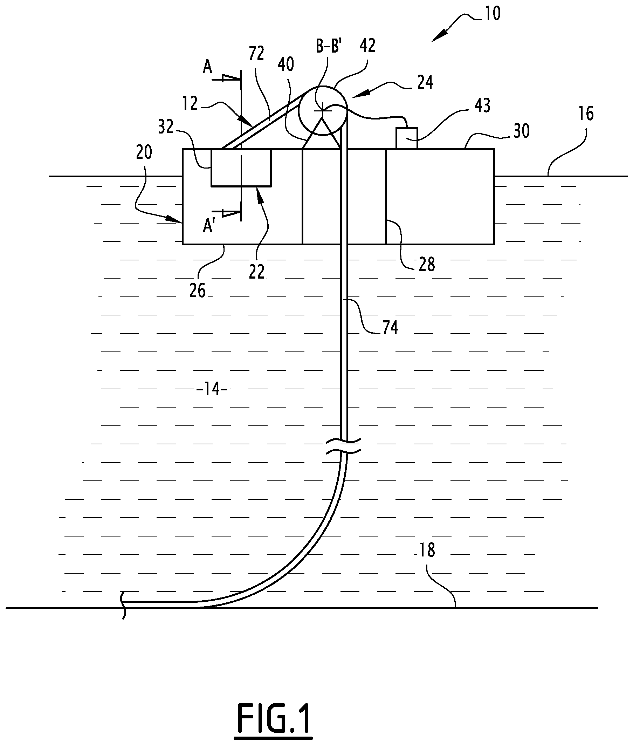

Une première installation de pose 10 selon l'invention est illustrée par les figures 1 à 5.

L'installation 10 est destinée à la pose d'un élément allongé 12 dans une étendue d'eau 14.

L'étendue d'eau 14 est par exemple une mer, un océan ou un lac. La profondeur de l'étendue d'eau 14 entre la surface 16 et le fond 18 au droit de l'installation 10 est supérieure à 10 mètres et notamment comprise entre 100 mètres et 4000 mètres.

L'élément allongé 12 est par exemple une conduite. La conduite est notamment destinée à transporter des hydrocarbures recueillis dans le fond de l'étendue d'eau jusqu'à la surface de l'étendue d'eau.

La conduite est en particulier une conduite flexible déroulée dans l'étendue d'eau 14 par l'intermédiaire de l'installation de pose 10.

Dans tout ce qui suit, une conduite flexible est notamment une conduite telle que décrite dans les documents normatifs publiés par l'American Petroleum Institute (API), API 17J, et API RP17B, bien connus de l'homme du métier.

Cette définition englobe indifféremment les conduites flexibles de type non liées (« unbonded « en anglais), ou liées (« bonded » en anglais).

Plus généralement, et en variante, la conduite flexible est un faisceau composite de type « bundle », comprenant au moins un tube de transport de fluide et un ensemble de câbles électriques ou optiques propres à transporter une puissance électrique ou hydraulique ou une information entre le fond et la surface de l'étendue d'eau.

En variante encore, la conduite est un ombilical décrit dans les documents normatifs de l'American Petroleum Institute (API) API17E.

Plus généralement encore, l'élément allongé 12 est un câble formant par exemple une ligne de descente d'un objet dans l'étendue d'eau. Ce câble est par exemple un câble métallique ou un câble constitué de fibres synthétiques. L'élément allongé 12 peut porter des équipements, tels que des embouts ou des équipements de fond qui présentent localement une étendue transversale supérieure à l'étendue transversale moyenne de l'élément allongé 12.

En référence à la figure 1, l'installation de pose 10 comporte un ensemble de surface 20, un ensemble de stockage 22 de l'élément allongé 12, porté par l'ensemble de surface 20, et un dispositif 24 de pose selon l'invention, formé par un treuil cabestan.

L'ensemble de surface 20 est partiellement immergé dans l'étendue d'eau 14. Avantageusement, l'ensemble de surface 20 flotte à la surface 16 de l'étendue d'eau 14. Il est par exemple formé par un navire de pose, une plate-forme ou encore une barge.

Dans l'exemple représenté sur la figure 1, l'ensemble de surface 20 comporte une coque 26 flottant sur l'étendue d'eau 14. La coque délimite avantageusement un puits 28 destiné à la descente de l'élément allongé 12 dans l'étendue d'eau 14.

Le puits 28 traverse la coque 26. Il débouche vers le haut sur un pont 30 de la coque 26. Il débouche vers le bas dans l'étendue d'eau 24.

L'ensemble de stockage 22 est formé par un organe rotatif 32 de stockage de l'élément allongé 12 dans une configuration enroulée. L'organe rotatif 32 est par exemple un tambour ou un panier.

L'ensemble de stockage 22 est disposé sur le pont 30 ou dans la coque 26.

La rotation de l'organe de stockage 32 dans un premier sens autour de son axe A-A' permet le déroulement d'une longueur croissante de l'élément allongé 12 vers le dispositif de pose 24, alors que la rotation dans un deuxième sens opposé au premier sens permet l'enroulement d'une longueur croissante de l'élément allongé 12 sur l'organe de stockage 32.

En référence à la figure 1, le dispositif de pose 10 comporte un support 40 monté fixe sur l'ensemble de surface 20, un tambour 42 monté rotatif autour d'un axe central B-B', et une centrale 43 d'entraînement en rotation du tambour 42 autour de l'axe central B-B'.

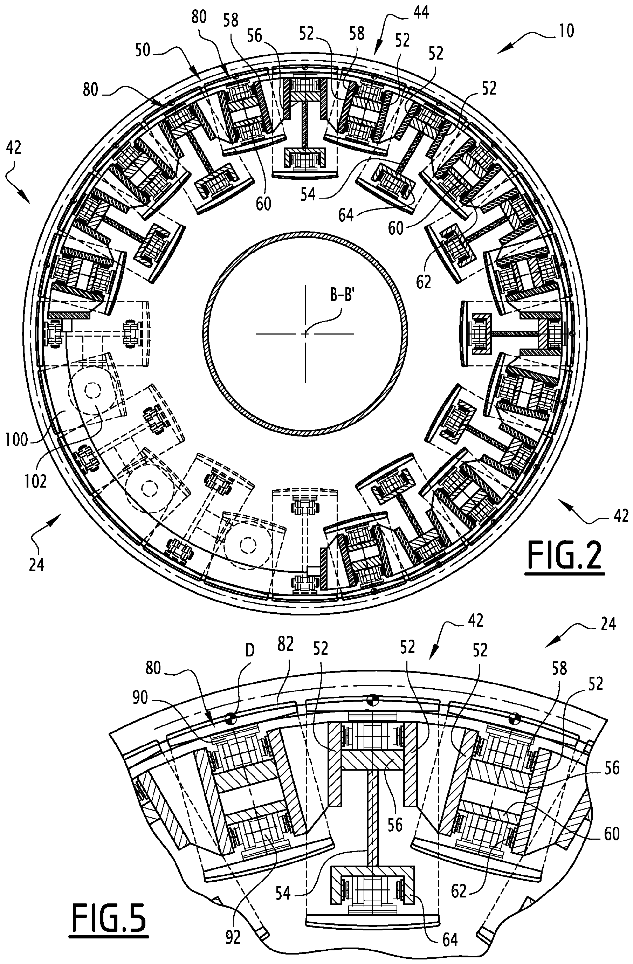

Comme illustré par les figures 2 à 5, le dispositif de pose 10 comporte en outre, selon l'invention, un mécanisme 44 d'entraînement d'au moins une spire de l'élément allongé 12 sur le tambour 42, qui va être décrit en détail plus bas.

Dans cet exemple, l'axe central B-B' de rotation du tambour 42 est horizontal.

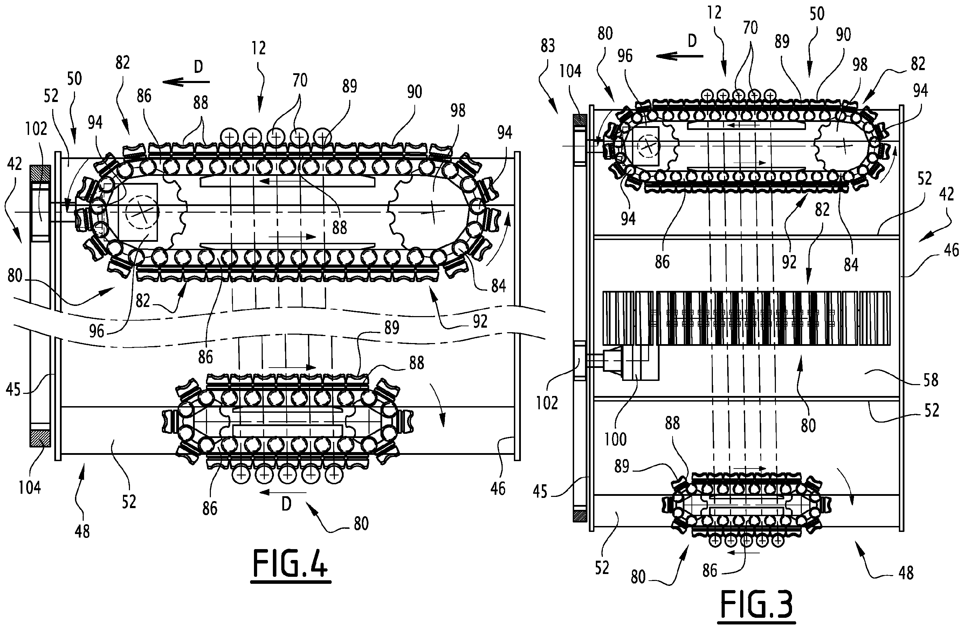

En référence à la figure 3, le tambour 42 comporte deux joues latérales 45, 46 opposées, et un ensemble 48 de liaison des joues 45, 46 définissant une enveloppe circonférentielle 50 d'enroulement de l'élément allongé 12 autour de l'axe central B-B'.

Dans cet exemple, chaque joue 45, 46 est formée par un élément discoïde s'étendant transversalement par rapport à l'axe B-B'.

L'ensemble de liaison 48 forme un fût du tambour 42. Il comporte ici une pluralité de poutres axiales 52, 54 raccordant entre elles les joues 45, 46, parallèlement à l'axe B-B'.

Comme illustré par la figure 2, l'ensemble de liaison 48 comporte ainsi un premier groupe de poutres axiales 52 extérieures, réparties angulairement autour de l'axe B-B' et un deuxième groupe de poutres axiales 54 intérieures, disposées plus proches de l'axe B-B' que les poutres axiales 52 extérieures.

Dans cet exemple, les poutres extérieures 52 sont organisées par paires de poutres parallèles. Les poutres extérieures 52 de chaque paire sont raccordées deux à deux par une paroi de fond 56 extérieure.

Ainsi, les poutres extérieures 52 définissent une pluralité de gouttières extérieures 58, obturées vers l'axe B-B' par la paroi de fond 56 et débouchant extérieurement à l'écart de l'axe B-B'.

Les gouttières extérieures 58 sont réparties angulairement autour de l'axe B-B'. Chaque gouttière extérieure 58 s'étend ici suivant une direction D de déplacement destinée à former un angle non nul avec l'axe local de chaque spire de l'élément allongé 12 enroulée autour du tambour 42.

Dans cet exemple, la direction de déplacement D est parallèle à l'axe B-B'.

Avantageusement, chaque gouttière extérieure 58 s'étend continûment jusqu'aux joues respectives 45, 46.

En outre, une première partie des paires de poutres extérieures 52 sont raccordées deux à deux par une paroi de fond intérieure 60. Elles définissent ainsi un premier groupe de gouttières intérieures 62, obturées à l'écart de l'axe B-B' par la paroi de fond intérieure 60 et débouchant intérieurement vers l'axe B-B'.

Dans cet exemple, chaque poutre intérieure 54 fait saillie à partir de la paroi de fond 60 d'une des paires de poutres extérieures 52.

Chaque poutre intérieure 54 porte une gouttière intérieure 64 d'un deuxième groupe de gouttières intérieures 64.

Chaque gouttière intérieure 64 est obturée à l'écart de l'axe B-B' et débouche intérieurement vers l'axe B-B'.

Les gouttières intérieures 64 du deuxième groupe de gouttières intérieures 64 sont situées plus proches de l'axe B-B' que les gouttières intérieures 62 du premier groupe de gouttières intérieures 62.

Dans une configuration préférée, les gouttières intérieures 62 du premier groupe sont situées en quinconce par rapport aux gouttières intérieures 64 du deuxième groupe.

Plus généralement, chaque gouttière intérieure 62, 64 s'étend à l'opposé d'une gouttière extérieure 58, suivant une direction parallèle à la direction de déplacement D.

Chaque gouttière intérieure 62, 64 s'étend continûment entre les joues 45, 46.

La disposition en quinconce des gouttières intérieures 62, 64 garantit une compacité maximale du mécanisme d'entraînement 44.

Le tambour 42 est propre à être entraîné en rotation autour de l'axe central B-B' par la centrale 43, pour permettre le dévidement de l'élément allongé 12 depuis l'ensemble de stockage 22 vers l'étendue d'eau 14.

À cet effet, et comme illustré par les figures 1 et 4, l'élément allongé 12 est partiellement enroulé en hélice autour du tambour 42 en formant une pluralité de spires 70 serrées sur l'enveloppe circonférentielle 50.

Ainsi, l'élément allongé 12 présente un tronçon amont détendu 72 s'étendant en chaînette entre l'ensemble de stockage 22 et le tambour 42 et un tronçon aval sous tension 74, s'étendant depuis le tambour 42 jusqu'à l'étendue d'eau 14, avantageusement verticalement à travers le puits 28.

Pour assurer un dévidement efficace de l'élément allongé 12, le mécanisme d'entraînement 44 comporte, selon l'invention, au moins un ensemble de déplacement 80 de chaque spire 70 suivant une direction de déplacement D formant un angle non nul avec un axe local C-C' de la spire 70, pris au niveau d'une région d'appui 82 de la spire 70 sur l'ensemble de déplacement 80.

Il comprend en outre un ensemble d'activation 83 de chaque ensemble de déplacement 80.

De préférence, la direction de déplacement D forme un angle d'au moins 10°, avantageusement d'au moins 45°, et préférentiellement d'au moins 80° avec l'axe local C-C'.

La direction de déplacement D forme en outre un angle inférieur à 80°, notamment inférieur à 45°, et de préférence sensiblement nul avec un axe parallèle à l'axe central B-B' passant par la région d'appui 82.

Ainsi, dans l'exemple représenté sur les figures 3 et 4, la direction de déplacement D est parallèle à l'axe central B-B'.

Comme illustré sur la figure 2, le mécanisme d'entraînement 44 comporte une pluralité d'ensembles de déplacement 80 parallèles, répartis angulairement autour de l'axe B-B'.

L'étendue angulaire de chaque ensemble de déplacement 80 autour de l'axe B-B' est inférieure à 45°.

Au moins un ensemble de déplacement 80 s'étend avantageusement sur sensiblement toute la largeur du tambour 42 entre les joues 45, 46.

Dans l'exemple représenté sur les figures 2 à 4, chaque ensemble de déplacement 80 comporte un organe sans fin 82 déplaçable suivant la direction de déplacement D, et un ensemble de mise en déplacement 84 de l'organe sans fin 82.

L'organe sans fin 82 et son ensemble de mise en déplacement 84 sont portés par le tambour 42 et sont déplaçables en rotation conjointe avec le tambour 42.

En référence à la figure 4, chaque organe sans fin 82 est fermé sur lui-même. Il comporte dans cet exemple une chaîne fermée 86 et une pluralité de patins 88 de réception des spires 70, montés sur la chaîne 86.

Chaque patin 88 délimite une gorge 89 de réception d'une spire 70. La gorge 89 s'étend suivant un axe qui forme un angle non nul avec la direction de déplacement D. De préférence, dans l'exemple représenté sur les figures, cet angle est supérieur à 45°, notamment supérieur à 80°.

Lorsque la spire 70 est reçue dans la gorge 89, la gorge 89 définit une région de contact de la spire 70. La spire 70 présente alors un axe local confondu avec celui de la gorge 89, pris au niveau de la région de contact.

L'organe sans fin 82 présente ainsi un tronçon axial extérieur linéaire 90 destiné à définir partiellement l'enveloppe circonférentielle 50 d'enroulement de l'élément allongé 12, et un tronçon intérieur linéaire 92 de retour.

Le tronçon intérieur 92 et le tronçon extérieur 90 sont raccordés entre eux par des tronçons recourbés d'extrémité 94, engagés autour de l'ensemble de mise en déplacement 84.

L'organe sans fin 82 présente ainsi une forme allongée suivant la direction de déplacement D.

Dans l'exemple de la figure 3, le tronçon extérieur 90 est reçu dans une gouttière extérieure 58 et le tronçon intérieur 92 est reçu dans une gouttière intérieure 62, 64 située à l'opposé de la gouttière extérieure 58 recevant le tronçon extérieur 90.

L'ensemble de mise en déplacement 84 comporte, pour chaque ensemble de déplacement 80, une roue 96 d'entraînement active et une roue entrainée 98 passive. Il comprend en outre un renvoi d'angle 100, engagé avec la roue d'entraînement 96 et un satellite périphérique 102, destiné à coopérer avec l'ensemble d'activation 83.

Les roues 96, 98 présentent une denture extérieure pour s'engager sur l'organe sans fin 82 autour des tronçons recourbés 94. Elles sont portées chacune par le tambour 42 et sont montées rotatifs autour d'un axe D-D' perpendiculaire à la direction de déplacement D.

Le renvoi d'angle 100 comprend un engrenage propre transmettre un mouvement de rotation du satellite 102 autour d'un axe sensiblement parallèle à l'axe central B-B' à la roue d'entraînement active 96, pour l'entraîner en rotation autour de l'axe D-D'.

Dans cet exemple, chaque satellite 102 fait saillie axialement le long d'une joue latérale 45 du tambour 42.

La roue d'entraînement active 96 est ainsi apte à déplacer l'organe sans fin 82 autour des roues 96, 98. Ce déplacement provoque une translation du tronçon extérieur 90, le long de la direction D, dans un premier sens et une translation opposée du tronçon intérieur 92, le long de la direction D, dans un deuxième sens opposé au premier sens.

L'ensemble d'activation 83 est propre à coopérer avec chaque satellite 102 pour provoquer l'entraînement en rotation du satellite 102 lors de la rotation du tambour 42.

Dans cet exemple, l'ensemble d'activation 83 comporte une couronne dentée 104 montée fixe en rotation le long d'une joue 45 du tambour 42.

Ainsi, la rotation du tambour 42 autour de l'axe central B-B' provoque un mouvement de rotation de chaque satellite 102 dans la couronne dentée 104, et par suite, un mouvement de rotation du satellite 102 autour de son axe.

Un procédé de pose d'un élément allongé 12 dans une étendue d'eau 14, à l'aide de l'installation de pose 10, va maintenant être décrit.

Initialement, l'élément allongé 12 stocké dans l'ensemble de stockage 22 est amené jusqu'à son lieu de pose par l'ensemble de surface 20.

Il est ensuite déroulé hors de l'ensemble de stockage 22 et est enroulé autour de l'enveloppe circonférentielle 50 du tambour 42 en formant plusieurs spires 70 hélicoïdales.

Chaque spire 70 est placée localement au contact de chaque ensemble de déplacement 80, dans une région de contact. Dans cet exemple, chaque spire 70 est reçue successivement dans une gorge 89 d'un patin 88 qui oriente la spire 70 suivant un axe local C-C' au niveau de la région de contact avec l'ensemble de déplacement 80.

L'élément allongé 12 présente alors un tronçon amont 72 détendu qui s'étend entre l'ensemble de stockage 22 et un premier bord latéral de l'enveloppe circonférentielle 50 situé au voisinage d'une première joue 46.

Les spires 70 s'étendent successivement jusqu'à un deuxième bord latéral de l'enveloppe circonférentielle 50 situé au voisinage d'une deuxième joue 45.

L'élément allongé 12 présente également un tronçon aval 74 s'étendant verticalement depuis le deuxième bord latéral jusqu'à l'étendue d'eau 14, avantageusement à travers le puits 28.

Pour descendre l'élément allongé 12, la centrale 43 est activée, entraînant en rotation le tambour 42 autour de l'axe B-B'.

Cette rotation provoque le dévidement d'une longueur croissante de l'élément allongé 12 hors de l'ensemble de stockage 22, et l'insertion, dans l'étendue d'eau 14, d'une longueur croissante correspondante de l'élément allongé 12.

La rotation du tambour 42 active automatiquement l'ensemble de mise en déplacement 84 de chaque organe sans fin 82.

En particulier, chaque satellite 102 est entraîné en rotation dans la couronne dentée 104, provoquant une rotation du satellite 102 autour de son axe. Ce mouvement de rotation est transmis à chaque roue d'entraînement 96 par l'intermédiaire du renvoi d'angle 100.

La rotation de la roue d'entraînement 96 provoque à son tour la rotation de la roue entraînée 98, et le déplacement du tronçon extérieur 90 de l'organe sans fin 82 suivant la direction de déplacement D.

La direction de déplacement D formant un angle non nul avec l'axe local de chaque spire 70 au niveau de la région de contact avec l'ensemble de déplacement 80, la spire 70 se décale suivant la direction de déplacement D, dans le sens allant depuis la première joue 46, au voisinage de laquelle se trouve le tronçon amont 72, vers la deuxième joue 45, au voisinage de laquelle se trouve le tronçon aval 74.

Ainsi, le tronçon aval 74 est retenu de manière très efficace sur l'enveloppe circonférentielle 50 par effet cabestan. Par ailleurs, le déplacement de chaque spire 70 suivant la direction de déplacement D assure un glissement progressif des spires 70, d'une joue à l'autre, évitant un blocage de l'élément allongé 12 sur le tambour 42.

Le dévidement de l'élément allongé 12 se produit donc sans difficultés, à l'aide d'un mécanisme d'entraînement 44 de structure simple, et avantageusement activé directement par la rotation du tambour 42.

Le dispositif de pose 24 est donc particulièrement efficace, tout en présentant un encombrement minimal.

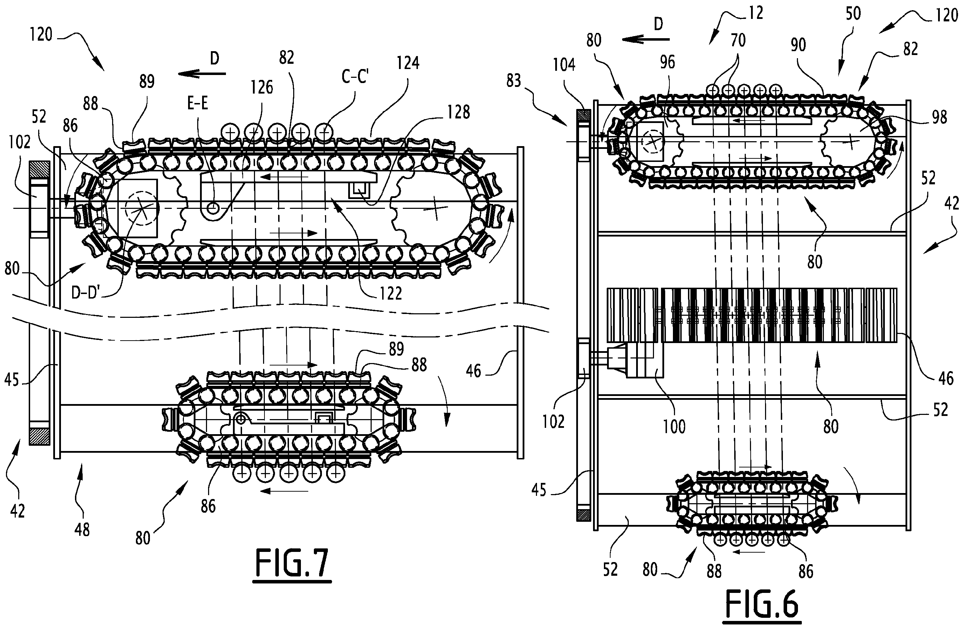

Le dispositif de pose 24 d'une deuxième installation de pose 120 selon l'invention est illustré par les figures 6 et 7.

À la différence du dispositif de pose 24 de la première installation 10, ce dispositif 24 comporte un mécanisme 122 de déplacement radial d'au moins un ensemble de déplacement 80.

Dans l'exemple représenté sur la figure 7, le mécanisme 122 est propre à déplacer localement une région 124 du tronçon extérieur 90 de l'organe sans fin 82 radialement à l'écart de l'axe central B-B'.

Dans cet exemple, le mécanisme 122 comporte une plaque d'appui 126 montée pivotante autour d'un axe E-E' perpendiculaire à la direction de déplacement D, et un actionneur 128 de déplacement radial d'une région de la plaque 126.

La plaque 126 est engagée sous le tronçon extérieur 90. L'actionneur 128 est disposé sous la plaque 124, la plaque 124 étant interposée entre l'actionneur 128 et le tronçon extérieur 90.

Ainsi, lors du déplacement du tronçon extérieur 90 le long de la direction D, l'actionneur 128 est propre à être activé pour soulever localement la région 124 et provoquer une légère inclinaison locale du tronçon extérieur 90, assurant un glissement encore plus efficace des spires 70 vers la joue 45.

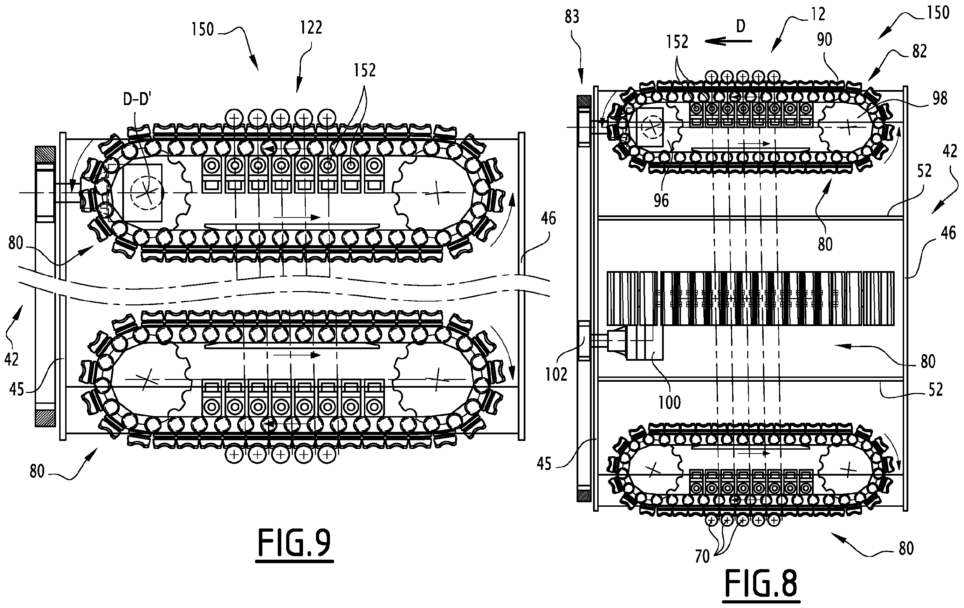

Le dispositif de pose 24 d'une troisième installation de pose 150 selon l'invention, représenté sur les figures 8 et 9, diffère du dispositif 24 de la deuxième installation de pose 120 en ce que le mécanisme 122 est dépourvu de plaque d'appui 124.

Le mécanisme 122 comporte ainsi une pluralité d'actionneurs 152 parallèles placés les uns les autres le long de la direction de déplacement D pour coopérer radialement avec le tronçon extérieur 90. Les actionneurs 152 sont pilotés sélectivement pour soulever successivement des régions successives du tronçon extérieur 90 à l'écart de l'axe central B-B'.

La rotation de la roue d'entraînement 96 provoque à son tour la rotation de la roue entraînée 98, et le déplacement du tronçon extérieur 90 de l'organe sans fin 82 suivant la direction de déplacement D.

La direction de déplacement D formant un angle non nul avec l'axe local de chaque spire 70 au niveau de la région de contact avec l'ensemble de déplacement 80, la spire 70 se décale suivant la direction de déplacement D, dans le sens allant depuis la première joue 46, au voisinage de laquelle se trouve le tronçon amont 72, vers la deuxième joue 45, au voisinage de laquelle se trouve le tronçon aval 74.

Ainsi, le tronçon aval 74 est retenu de manière très efficace sur l'enveloppe circonférentielle 50 par effet cabestan. Par ailleurs, le déplacement de chaque spire 70 suivant la direction de déplacement D assure un glissement progressif des spires 70, d'une joue à l'autre, évitant un blocage de l'élément allongé 12 sur le tambour 42.

Le dévidement de l'élément allongé 12 se produit donc sans difficultés, à l'aide d'un mécanisme d'entraînement 44 de structure simple, et avantageusement activé directement par la rotation du tambour 42.

Le dispositif de pose 24 est donc particulièrement efficace, tout en présentant un encombrement minimal.

Le dispositif de pose 24 d'une deuxième installation de pose 120 selon l'invention est illustré par les figures 6 et 7.

À la différence du dispositif de pose 24 de la première installation 10, ce dispositif 24 comporte un mécanisme 122 de déplacement radial d'au moins un ensemble de déplacement 80.

Dans l'exemple représenté sur la figure 7, le mécanisme 122 est propre à déplacer localement une région 124 du tronçon extérieur 90 de l'organe sans fin 82 radialement à l'écart de l'axe central B-B'.

Dans cet exemple, le mécanisme 122 comporte une plaque d'appui 126 montée pivotante autour d'un axe E-E' perpendiculaire à la direction de déplacement D, et un actionneur 128 de déplacement radial d'une région de la plaque 126.

La plaque 126 est engagée sous le tronçon extérieur 90. L'actionneur 128 est disposé sous la plaque 124, la plaque 124 étant interposée entre l'actionneur 128 et le tronçon extérieur 90.

Ainsi, lors du déplacement du tronçon extérieur 90 le long de la direction D, l'actionneur 128 est propre à être activé pour soulever localement la région 124 et provoquer une légère inclinaison locale du tronçon extérieur 90, assurant un glissement encore plus efficace des spires 70 vers la joue 45.

Le dispositif de pose 24 d'une troisième installation de pose 150 selon l'invention, représenté sur les figures 8 et 9, diffère du dispositif 24 de la deuxième installation de pose 120 en ce que le mécanisme 122 est dépourvu de plaque d'appui 124.

Le mécanisme 122 comporte ainsi une pluralité d'actionneurs 152 parallèles placés les uns les autres le long de la direction de déplacement D pour coopérer radialement avec le tronçon extérieur 90. Les actionneurs 152 sont pilotés sélectivement pour soulever successivement des régions successives du tronçon extérieur 90 à l'écart de l'axe central B-B'.

Il découle de la description et des figures que l'ensemble de déplacement 80 est solidaire en rotation du tambour 42.

## Revendications

1. Dispositif de pose (24) d'un élément allongé (12) dans une étendue d'eau (14), comportant :
- un tambour (42) destiné à être entraîné en rotation autour d'un axe central (B-B'), le tambour (42) définissant une enveloppe circonférentielle (50) d'enroulement de l'élément allongé (12) autour de l'axe central (B-B'), l'élément allongé (12) étant destiné à former au moins une spire (70) autour de l'axe central (B-B') sur l'enveloppe circonférentielle (50) ;
- un mécanisme (44) d'entraînement de la ou de chaque spire (70) de l'élément allongé (12) sur l'enveloppe circonférentielle (50) ;
le mécanisme d'entraînement (44) comportant au moins un ensemble (80) de déplacement de la spire (70) suivant une direction de déplacement (D) formant un angle non nul avec l'axe local de la spire (70), pris au niveau d'une région d'appui de la spire (70) sur l'ensemble de déplacement (80),
l'ensemble de déplacement (80) comportant un organe sans fin (82) déplaçable suivant la direction de déplacement (D), et un ensemble de mise en mouvement (84) de l'organe sans fin (82), l'organe sans fin (82) et l'ensemble de mise en mouvement (84) étant portés par le tambour (42) pour être déplacés en rotation conjointe avec le tambour (42) autour de l'axe central (B-B'),
l'organe sans fin (82) comporte une chaîne (86) et une pluralité de patins (88) montés sur la chaîne (86), **caractérisé en ce que** chaque patin (88) définit une gorge (89) de réception d'une spire (70) de l'élément allongé (12).

2. Dispositif (24) selon la revendication 1, **caractérisé en ce que** la direction de déplacement (D) forme un angle d'au moins 10°, avantageusement d'au moins 45° avec l'axe local de la spire (70), pris au niveau d'une région d'appui de la spire (70) sur l'ensemble de déplacement (80).

3. Dispositif (24) selon l'une quelconque des revendications 1 ou 2, **caractérisé en ce que** la direction de déplacement (D) forme un angle inférieur à 80°, avantageusement inférieur à 45° avec un axe parallèle à l'axe central (B-B') de rotation du tambour (42), la direction de déplacement (D) étant de préférence parallèle à l'axe central (B-B') de rotation du tambour (42).

4. Dispositif (24) selon l'une quelconque des revendications précédentes, **caractérisé en ce que** l'ensemble de déplacement (80) s'étend angulairement autour de l'axe central (B-B') sur une étendue angulaire inférieure à 360°, notamment inférieure à 45°.

5. Dispositif (24) selon l'une quelconque des revendications précédentes, **caractérisé en ce que** le mécanisme d'entraînement (44) comporte une pluralité d'ensembles de déplacement (80) de la ou de chaque spire (70) suivant une direction de déplacement (D), la direction de déplacement (D) formant un angle non nul avec l'axe local de la spire (70), pris au niveau d'une région d'appui de la spire (70) sur l'ensemble de déplacement (80), les ensembles de déplacement (80) étant répartis angulairement autour de l'axe central (B-B').

6. Dispositif (24) selon la revendication 5, **caractérisé en ce que** l'ensemble de mise en mouvement (84) est propre à déplacer l'organe sans fin (82) suivant la direction de déplacement (D) sous l'effet de l'entraînement en rotation du tambour (42) autour de l'axe central (B-B').

7. Dispositif (24) selon l'une quelconque des revendications précédentes, **caractérisé en ce que** le tambour (42) comporte deux joues latérales (45, 46) et un ensemble de liaison (48) raccordant les deux joues latérales (45, 46), l'ensemble de liaison (48) définissant l'enveloppe circonférentielle (50), l'ensemble de liaison (50) délimitant, pour le ou chaque ensemble de déplacement (80), au moins une gouttière externe (58) de réception de l'ensemble de déplacement (80) débouchant radialement à l'écart de l'axe central (B-B').

8. Dispositif (24) selon la revendication 7, **caractérisé en ce que** l'ensemble de liaison (48) comporte une pluralité de poutres axiales (52) raccordant les joues (45, 46) entre elles, la gouttière externe (58) de réception étant délimitée entre deux poutres axiales adjacentes (52).

9. Dispositif (24) selon la revendication 8, prise en combinaison avec une quelconque des revendications 6 à 7, **caractérisé en ce qu'**un tronçon extérieur (90) de l'organe sans fin (82) est reçu dans la gouttière externe (58), l'ensemble de liaison (48) délimitant une gouttière interne (62, 64) de réception d'un tronçon intérieur (92) de l'organe sans fin (82), la gouttière interne (62, 64) débouchant radialement vers l'axe central (B-B'), à l'opposé de la gouttière externe (58).

10. Dispositif (24) selon la revendication 9, **caractérisé en ce qu'**il comporte une pluralité d'ensembles de déplacement (80), un tronçon extérieur (90) de l'organe sans fin (82) de chaque ensemble de déplacement (80) étant reçu dans une gouttière externe (58), un tronçon intérieur (92) de l'organe sans fin (82) de chaque ensemble de déplacement (80) étant reçu dans une gouttière interne (62, 64), au moins un premier groupe de gouttières internes (62) étant décalé radialement à l'écart de l'axe central (B-B') par rapport à un deuxième groupe de gouttières internes (64).

11. Dispositif (24) selon l'une quelconque des revendications précédentes, **caractérisé en ce qu'**il comporte un mécanisme de déplacement radial (122) d'une région (124) de l'ensemble de déplacement (80) à l'écart de l'axe central (B-B'), ou vers l'axe central (B-B').

12. Dispositif (24) selon la revendication 11, **caractérisé en ce que** le mécanisme de déplacement radial (122) comporte une pluralité d'actionneurs (152) parallèles placés les uns les autres le long de la direction de déplacement (D) pour coopérer radialement avec le tronçon extérieur (90).

13. Installation (10 ; 120 ; 150) de pose d'un élément allongé (12) dans une étendue d'eau (14), **caractérisé en ce qu'**elle comporte :
- un ensemble de surface (20), s'étendant à la surface de l'étendue d'eau (14) ;
- un dispositif (24) selon l'une quelconque des revendications précédentes, porté par l'ensemble de surface (20), le tambour (42) étant monté rotatif sur l'ensemble de surface (20) autour de l'axe central (B-B') ;
- un élément allongé (12) comportant au moins une spire (70) enroulée autour du tambour (42), une région d'appui de la spire (70) étant disposée en appui sur l'ensemble de déplacement (80), la direction de déplacement (D) définie par l'ensemble de déplacement (80) formant un angle non nul avec l'axe local de la spire (70), pris au niveau de la région d'appui.

14. Procédé de pose d'un élément allongé (12) dans une étendue d'eau (14), comprenant les étapes suivantes :
- fourniture d'une installation (10 ; 120 ; 150) selon la revendication 13, l'élément allongé (12) comportant au moins une spire (70) enroulée autour du tambour (42) ;
- entraînement en rotation du tambour (42) autour de l'axe central (B-B') pour descendre ou remonter l'élément allongé (12) dans l'étendue d'eau (14) ;
- simultanément, déplacement par l'ensemble de déplacement (80), d'au moins une spire (70) de l'élément allongé (12) suivant une direction de déplacement (D) formant un angle non nul avec l'axe local de la spire (70), pris au niveau d'une région d'appui de la spire (70) sur l'ensemble de déplacement (80).

## Patentansprüche

1. Vorrichtung (24) zum Verlegen eines länglichen Elements (12) in einem Gewässer (14), umfassend:
- eine Trommel (42) zur Rotation um eine zentrale Achse (B - B'), wobei die Trommel (42) eine Umfangshülle (50) zur Wicklung des länglichen Elements (12) um die zentrale Achse (B - B'), wobei das längliche Element (12) mindestens eine Windung (70) um die zentrale Achse (B - B') auf der Umfangshülle (50) bilden soll;
- Eine Antriebsmechanik (44) der bzw. jeder Windung (70) des länglichen Elements (12) auf der Umfangshülle (50);
wobei die Antriebsmechanik (44) mindestens eine Baugruppe (80) zur Verschiebung der Windung (70) in einer Verschiebungsrichtung (D), die, von der Höhe eines Auflagebereichs der Windung (70) auf der Verschiebungsbaugruppe (80) her gesehen, einen Winkel ungleich Null zur lokalen Achse der Windung (70) bildet,
wobei die Verschiebungsbaugruppe (80) umfasst: ein Endlosorgan (82), das in der Verschiebungsrichtung (D) verschiebbar ist, und eine Baugruppe zum Bewegen (84) des Endlosorgans (82), wobei das Endlosorgan (82) und die Bewegungsbaugruppe (84) von der Trommel (42) getragen werden, um gemeinsam mit der Trommel (42) um die zentrale Achse (B - B') verschoben zu werden,
wobei das Endlosorgan (82) eine Kette (86) und eine Mehrzahl Gleiter (88), die auf der Kette (86) montiert sind, umfasst, **dadurch gekennzeichnet, dass** jeder Gleiter (88) eine Nut (89) zur Aufnahme einer Windung (70) des länglichen Elements (12) definiert.

2. Vorrichtung (24) nach Anspruch 1, **dadurch gekennzeichnet, dass** die Verschiebungsrichtung (D), von der Höhe eines Auflagebereichs der Windung (70) auf der Verschiebungsbaugruppe (80) her gesehen, einen Winkel von mindestens 10°, vorteilhafterweise mindestens 45°, zur lokalen Achse der Windung (70) bildet.

3. Vorrichtung (24) nach einem der Ansprüche 1 oder 2, **dadurch gekennzeichnet, dass** die Verschiebungsrichtung (D) einen Winkel kleiner 80°, vorteilhafterweise kleiner 45°, zu einer parallel zur zentralen Rotationsachse (B - B') der Trommel (42) verlaufenden Achse bildet, wobei die Verschiebungsrichtung (D) vorzugsweise parallel zur zentralen Rotationsachse (B - B') der Trommel (42) verläuft.

4. Vorrichtung (24) nach einem der vorstehenden Ansprüche, **dadurch gekennzeichnet, dass** die Verschiebungsbaugruppe (80) sich gewinkelt um die zentrale Achse (B - B') über eine Winkelausdehnung kleiner 360°, insbesondere kleiner 45°, erstreckt.

5. Vorrichtung (24) nach einem der vorstehenden Ansprüche, **dadurch gekennzeichnet, dass** die Antriebsmechanik (44) eine Mehrzahl Baugruppen (80) zur Verschiebung der bzw. jeder Windung (70) in einer Verschiebungsrichtung (D) umfasst, wobei die Verschiebungsrichtung (D), von der Höhe eines Auflagebereichs der Windung (70) auf der Verschiebungsbaugruppe (80) her gesehen, einen Winkel ungleich Null zur lokalen Achse der Windung (70) bildet, wobei die Verschiebungsbaugruppen (80) um die zentrale Achse (B - B') gewinkelt verteilt sind.

6. Vorrichtung (24) nach Anspruch 5, **dadurch gekennzeichnet, dass** die Bewegungsbaugruppe (84) dazu geeignet ist, das Endlosorgan (82) unter der Einwirkung der Rotation der Trommel (42) um die zentrale Achse (B - B') in der Verschiebungsrichtung (D) zu verschieben.

7. Vorrichtung (24) nach einem der vorstehenden Ansprüche, **dadurch gekennzeichnet, dass** die Trommel (42) umfasst: zwei Seitenwangen (45, 46) und eine Verbindungseinrichtung (48) die die beiden Seitenwangen (45, 46) verbindet, wobei die Verbindungseinrichtung (48) die Umfangshülle (50) definiert, wobei die Verbindungseinrichtung (50) für die bzw. jede Verschiebungsbaugruppe (80) mindestens eine Außenrinne (58) zur Aufnahme der Verschiebungsbaugruppe (80), die radial abseits der zentralen Achse (B - B') mündet.

8. Vorrichtung (24) nach Anspruch 7, **dadurch gekennzeichnet, dass** die Verbindungseinrichtung (48) eine Mehrzahl axialer Träger (52) umfasst, die die Wangen (45, 46) miteinander verbindet, wobei die äußere Aufnahmerinne (58) zwischen zwei benachbarten axialen Trägern (52) abgegrenzt ist.

9. Vorrichtung (24) nach Anspruch 8 in Verbindung mit einem der Ansprüche 6 - 7, **dadurch gekennzeichnet, dass** ein äußerer Abschnitt (90) des Endlosorgans (82) in die Außenrinne (58) aufgenommen wird, wobei die Verbindungseinrichtung (48) eine Innenrinne (62, 64) zur Aufnahme eines inneren Abschnitts (92) des Endlosorgans (82) abgrenzt, wobei die Innenrinne (62, 64) radial in Richtung der zentralen Achse (B - B') gegenüber der Außenrinne (58) mündet.

10. Vorrichtng (24) nach Anspruch 9, **dadurch gekennzeichnet, dass** sie umfasst: eine Mehrzahl Verschiebungsbaugruppen (80), wobei ein äußerer Abschnitt (90) des Endlosorgans (82) jeder Verschiebungsbaugruppe (80) in eine Außenrinne (58) aufgenommen ist, wobei ein innerer Abschnitt (92) des Endlosorgans (82) jeder Verschiebungsbaugruppe (80) in eine Innenrinne (62, 64) aufgenommen ist, wobei mindestens eine erste Gruppe von Innenrinnen (62) radial abseits der zentralen Achse (B - B') relativ zu einer zweiten Gruppe von Innenrinnen (64) versetzt ist.

11. Vorrichtung (24) nach einem der vorstehenden Ansprüche, **dadurch gekennzeichnet, dass** sie einen Mechanismus (122) zur radialen Verschiebung eines Bereichs (124) der Verschiebungsbaugruppe (80) weg von bzw. in Richtung der zentralen Achse (B - B') umfasst.

12. Vorrichtung (24) nach Anspruch 11, **dadurch gekennzeichnet, dass** der radiale Verschiebungsmechanismus (122) eine Mehrzahl paralleler Stellantriebe (152) umfasst, die entlang der Verschiebungsrichtung (D) verteilt sind, um radial mit dem äußeren Abschnitt (90) zusammenzuwirken.

13. Einrichtung (10; 120; 150) zum Verlegen eines länglichen Elements (12) in einem Gewässer (14), **dadurch gekennzeichnet, dass** sie umfasst:
- eine Oberflächeneinheit (20), die sich auf die Oberfläche des Gewässers (14) erstreckt;
- eine Vorrichtung (24) nach einem der vorstehenden Ansprüche, die von der Oberflächeneinheit (20) getragen wird, wobei die Trommel (42) um die zentrale Achse (B - B') rotierend auf der Oberflächeneinheit (20) montiert ist;
- ein längliches Element (12), umfassend mindestens eine Windung (70), die um die Trommel (42) gewickelt ist, wobei ein Auflagebereich der Windung (70) in Auflage auf der Verschiebungsbaugruppe (80) angeordnet ist, wobei die von der Verschiebungsbaugruppe (80) definierte Verschiebungsrichtung (D), von der Höhe des Auflagebereichs her gesehen, einen Winkel ungleich Null zur lokalen Achse der Windung (70) bildet.

14. Verfahren zum Verlegen eines länglichen Elements (12) in einem Gewässer (14), umfassend die Schritte:
- Vorsehen einer Einrichtung (10; 120; 150) nach Anspruch 13, wobei das längliche Element (12) mindestens eine Windung (70) umfasst, die um die Trommel (42) gewickelt ist;
- Rotieren der Trommel (42) um die zentrale Achse (B - B') um das längliche Element (12) im Gewässer (14) auf- und absteigen zu lassen;
- gleichzeitiges Verschiebung mindestens einer Windung (70) des länglichen Elements (12) durch die Verschiebungsbaugruppe (80) in einer Verschiebungsrichtung (D), die, von der Höhe eines Auflagebereichs der Windung (70) auf der Verschiebungsbaugruppe (80) her gesehen, einen Winkel ungleich Null zur lokalen Achse der Windung (70) bildet.

## Claims

1. Device (24) for laying an elongate element (12) in a stretch of water (14), comprising:
- a drum (42) intended to be driven in rotation about a central axis (B-B'), the drum (42) defining a circumferential casing (50) for winding the elongate element (12) around the central axis (B-B '), the elongate element (12) being intended to form at least one turn (70) about the central axis (B-B') on the circumferential casing (50);
- a drive mechanism (44) for driving the or each turn(s) (70) of the elongate element (12) on the circumferential casing (50);
the drive mechanism (44) comprising at least one movement assembly (80) to move the turn (70) along a direction of movement (D) forming a non-zero angle with the local axis of the turn (70), taken at a contact region of the turn (70) on the movement assembly (80),
the movement assembly (80) comprising an endless organ (82) that can be moved along the direction of movement (D), and an assembly (84) to set in motion the endless organ (82), the endless organ (82) and the setting in motion assembly (84) being carried by the drum (42) in order to be moved in joint rotation with the drum (42) about the central axis (B-B'),
the endless organ (82) comprises a chain (86) and a plurality of pads (88) mounted on the chain (86) **characterized in that** each pad (88) defines a channel (89) for receiving a turn (70) of the elongate element (12).

2. Device (24) according to claim 1, **characterised in that** the direction of movement (D) forms an angle of at least 10°, preferably of at least 45° with the local axis of the turn (70), taken at a contact region of the turn (70) on the movement assembly (80).

3. Device (24) according to any one of the claims 1 or 2, **characterised in that** the direction of movement (D) forms an angle less than 80°, preferably less than 45° with an axis parallel to the central axis of rotation (B-B') of the drum (42), the direction of movement (D) being preferably parallel to the central axis of rotation (B-B') of the drum (42).

4. Device (24) according to any one of the preceding claims, **characterised in that** the movement assembly (80) extends angularly around the central axis (B-B') over an angular extent less than 360°, in particular less than 45°.

5. Device (24) according to any one of the preceding claims, **characterised in that** the drive mechanism (44) comprises a plurality of movement assemblies (80) of the or each turn(s) (70) in a direction of movement (D), the direction of movement (D) forming a non-zero angle with the local axis of the turn (70), taken at a contact area of the turn (70) on the movement assembly (80), the movement assemblies (80) being spaced angularly around the central axis (B-B').

6. Device (24) according to claim 5, **characterised in that** the setting in motion assembly (84) is adapted to move the endless organ (82) along the direction of movement (D) under the effect of the driving in rotation of the drum (42) about the central axis (B-B').

7. Device (24) according to any one of the preceding claims, **characterised in that** the drum (42) comprises two lateral flanges (45, 46) and a linkage assembly (48) connecting the two lateral flanges (45, 46), the linkage assembly (48) defining the circumferential casing (50) and delimiting, for the or each movement assembly(ies) (80), at least one external channel (58) to receive the movement assembly (80) opening radially away from the central axis (B-B').

8. Device (24) according to claim 7, **characterised in that** the linkage assembly (48) includes a plurality of axial beams (52) connecting the flanges (45, 46) to each other, the outer receiving channel (58) being defined by two adjacent axial beams (52).

9. Device (24) according to claim 8, taken in combination with any one of the claims 6 to 7, **characterised in that** an outer section (90) of the endless organ (82) is received in the outer channel (58), the linkage assembly (48) delimiting an inner channel (62, 64) to receive an inner section (92) of the endless organ (82), and the inner channel (62, 64) opening radially towards the central axis (B-B'), opposite the outer channel (58).

10. Device (24) according to claim 9, **characterised in that** it comprises a plurality of movement assemblies (80), an outer section (90) of the endless organ (82) of each movement assembly (80) being received in an outer channel (58), an inner section (92) of the endless organ (82) of each movement assembly (80) is received in an inner channel (62, 64), at least a first group of inner channels (62) is offset radially away from the central axis (B-B') relative to a second group of inner channels (64).

11. Device (24) according to any one of the preceding claims, **characterised in that** it comprises a radial movement mechanism (122) of a region (124) of the movement assembly (80) away from the central axis (B-B'), or towards the central axis (B-B').

12. Device (24) according to claim 11, **characterized in that** the radial movement mechanism (122) comprises a plurality of actuators (152) arranged parallel to each other in the direction of movement (D) to interact radially with the outer section (90).

13. Installation (10; 120; 150) for laying an elongate element (12) in a stretch of water (14), **characterised in that** it comprises:
- a surface assembly (20) extending on the surface of the stretch of water (14);
- a device (24) according to any preceding claim, carried by the surface assembly (20), the drum (42) being mounted on the surface assembly (20) to rotate about the central axis (B-B');
- an elongate element (12) having at least one turn (70) wound around the drum (42), a contact region of the turn (70) being supported on the movement assembly (80), the direction of movement (D) defined by the movement assembly (80) forming a non-zero angle with the local axis of the turn (70) taken at the contact region.

14. A method of laying an elongate element (12) in a stretch of water (14), comprising the steps of:
- providing an installation (10; 120; 150) according to claim 13, the elongate element (12) having at least one turn (70) wound around the drum (42);
- driving the drum (42) to rotate about the central axis (B-B') in order to raise or lower the elongate element (12) in the stretch of water (14);
- simultaneously moving by the movement assembly (80) of at least one turn (70) of the elongate element (12) in a direction of movement (D) forming a non-zero angle with the local axis of the turn (70) at a contact region of the turn (70) on the movement assembly (80).
